# EUROPEAN PATENT SPECIFICATION

(11) **EP 1 914 615 B1**
(45) Date of publication and mention of the grant of the patent: **13.10.2010**
(21) Application number: 07016428.0
(22) Date of filing: 22.08.2007
(51) Int. Cl.: G05G 1/30

(54) **Pedal comprising a device for installing a rotation sensor on the motor-vehicle control pedal.**
Steuerpedal mit einer Vorrichtung zum Montieren eines Drehsensors auf das Steuerpedal eines Kraftfahrzeugs
Pédale avec un dispositif pour l'installation d'un capteur de rotation sur la pédale de commande de véhicule motorisé

(30) Priority: 19.10.2006 IT TO20060156 U
(43) Date of publication of application: 23.04.2008
(73) Proprietor: Sistemi Comandi Meccanici S.C.M. S.p.A., 20011 Corbetta (MI) (IT)
(72) Inventor: La Rosa, Giacomo, 90144 Palermo (IT); Cavaglia', Renato, 10040 Volvera (TO) (IT); Ballari, Marco, 10040 Gerbole di Volvera (TO) (IT)
(74) Representative: Lotti, Giorgio

(56) References cited:
- WO-A-2006/040339
- WO-A-2006/078579
- DE-B- 1 289 688
- US-A- 2 100 232
- US-A- 3 187 360
- US-A- 3 187 521
- US-A- 4 035 759
- US-A- 6 019 016
- US-A1- 2005 247 158

## Description

The present invention relates to a pedal comprising a device for installing a position/rotation sensor on the motor-vehicle control pedal and, in particular, on one of the pedals of the set of pedals.

Current automobile techniques are increasingly oriented to controlling, by means of electronic devices, operation of the various mechanical devices present on motor vehicles. For this reason, it now becomes necessary to control the travel of the control pedals so as to be able to send a position signal to a control unit, which controls other devices of the motor vehicle, for example, the engine control unit, the ESP, etc.

In this connection, it has been found useful to install a position or rotation sensor on one or more pedals of the pedal set.

Document US2005/0247158 teaches an electronic throttle control with an hysteresis device, that can pivot with the pedal arm.

Document WO 2006/078579 teaches a pedal assembly that includes a kickdown mechanism for changing the force required to push a treadle of a pedal.

Document US 3,187,521 finally teaches a mechanical coupling device wherein a shaft is rendered fixed with a potentiometer thanks to a retainer mounted transverse with respect to said shaft.

The purpose of the present invention is to provide a pedal comprising a device for installing a position/rotation sensor on a pedal of a set of pedals of a motor vehicle that will be simple, functional, and inexpensive.

The above and other purposes and advantages that will be understood more clearly from what follows are achieved, according to the invention, by a pedal comprising a device for installing a position/rotation sensor that presents the characteristics specified in the first claim.

There now follows a description of the structural and functional characteristics of a preferred but non-limiting embodiment of the device according to the invention. Reference is made to the attached plates of drawings, in which:

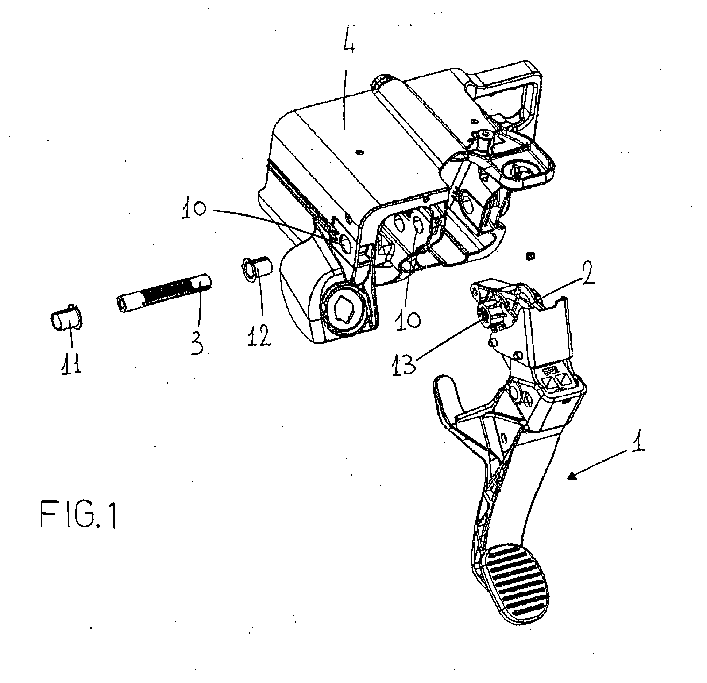

- Figure 1 is an exploded view of a pedal with its support to be mounted on the body of a motor vehicle;

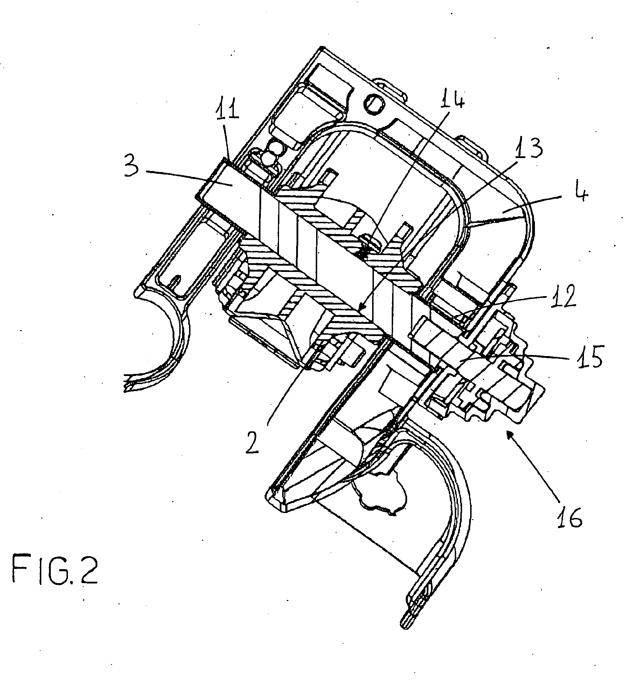

- Figure 2 is a cross-sectional view of the pedal at the height of the pin for connection to its support, also the pin and the support being represented in cross-sectional view; and

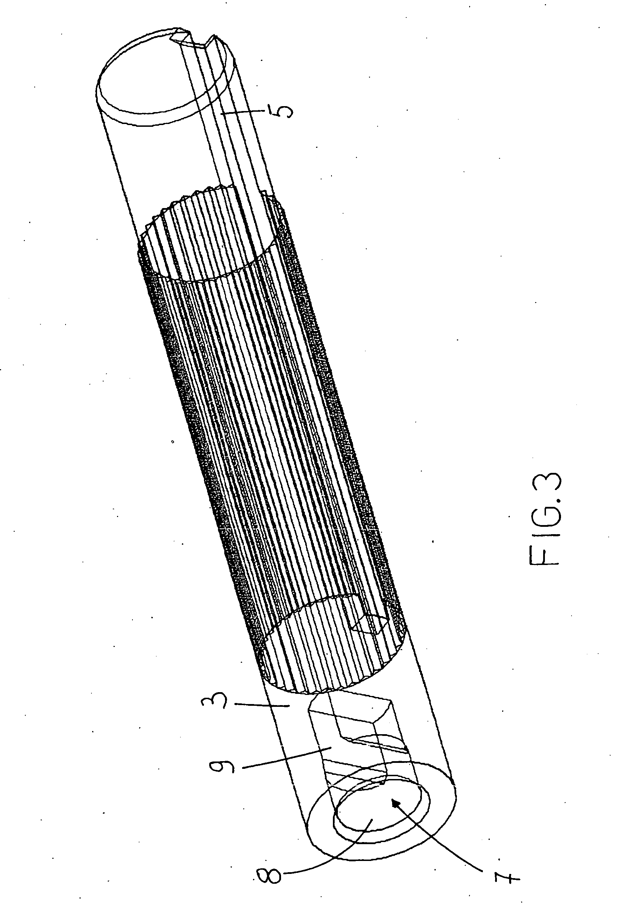

- Figure 3 is an enlarged see-through view of the pin for connection of the pedal to its support.

With reference to the figures, the number 1 designates as a whole a pedal of the set of pedals of a motor vehicle, in the case in point the clutch pedal. Said pedal is pivoted, at its top end 2, via a pin 3, on a support 4, having a section substantially shaped like a U turned upside down, fixed to the body of the vehicle (not illustrated).

The pin 3 is provided, on its outer surface for the majority of its length, with a longitudinal groove 5 and, at one of its ends, with an axial hole 7. The axial hole 7 has a first sector of circular section 8 and a second sector of rectangular section 9. The pin 3 is inserted in two through seats 10 made on the two walls of the support 4 after prior interposition of two bushings 11 and 12, designed to enable rotation thereof with respect to the support 4, and, of course, in a seat 13 made in the end 2 of the pedal that is to be connected to said support 4.

Operation of the whole arrangement is described in what follows. Two bushings 11 and 12 are premounted on the support, and then the end of the pedal is housed inside the support, and the pin that serves as fulcrum is driven into the bushings so that the ends of the pin 3 will face the outer surface of the support 4. Finally, the pin 3 and the end 2 of the pedal are rendered fixed in rotation via insertion in the pedal of a self-tapping screw 14, the end of which will be housed in the longitudinal groove 5. At this point, it is possible to insert the shaft 15 of a rotation sensor 16 into the axial hole 7 of the pin 3, which faces the outer surface of the support 4. Said shaft will of course have an outer profile that is congruous with the internal profile of the hole 7 so that it will be rendered fixed in rotation to the pin 3.

## Claims

1. A pedal comprising a device for installing a position/rotation sensor on a pedal (1) of a set of pedals of a motor vehicle, the device comprising:
- a pin (3) on which the pedal (1) is pivoted on;
- a support (4) fixable to the body of the motor vehicle and including said pin (3);
said pin(3) turning on two bushings (11, 12) inserted in through seats (10) made in the support, being fixed in rotation to one end (2) of the pedal by means of a self-tapping screw (14) and being provided with an axial hole (7) for insertion of a shaft (15) of the rotation sensor (16);
wherein said pin (3) comprises a longitudinal groove (5) on which one end of said self-tapping screw (14) is substantially orthogonally inserted.

2. The pedal and the installation device according to Claim 1, **characterized in that** said hole has a first sector of circular section (8) and a second sector of rectangular section (9).

3. The pedal and the installation device according to Claim 2, **characterized in that** the outer profile of the shaft (15) of the rotation sensor (16) substantially reproduces the inner profile of the axial hole (7).

4. The pedal and the installation device according to Claim 1, **characterized in that** the support (4) has a section shaped like a U turned upside down and **In that** the ends of the pin (3) face the outer surface.

## Patentansprüche

1. Steuerpedal mit einer Vorrichtung zum Montieren eines Lage-/Drehsensors auf ein Steuerpedal (1) eines Pedalsatzes in einem Kraftfahrzeug, wobei die Vorrichtung umfasst:
- einen Anschlussstift (3), auf dem das Steuerpedal (1) drehbar gelagert ist;
- eine Halterung (4), die mit der Kraftfahrzeugkarosserie befestigt werden kann und den genannten Stift (3) umfasst;
wobei sich der Stift (3) in zwei Lagerbuchsen (11, 12) drehen kann, die in durchgehenden Sitzen (10) eingeführt worden sind, welche in der Halterung hergestellt wurden, wobei der Stift an einem Ende (2) des Steuerpedals mithilfe einer selbstschneidenden Gewindeschraube (14) drehbar befestigt ist, und wobei er mit einer axialen Bohrung (7) zum Einführen in eine Welle (15) in den Drehsensor (16) versehen ist;
wobei ein Ende des Anschlussstifts (3) eine Längsnut (5) aufweist, in die ein Ende der Gewindeschneidschraube (14) im Wesentlichen orthogonal eingesetzt wird.

2. Steuerpedal- und Montagevorrichtung gemäß Anspruch 1, **dadurch gekennzeichnet, dass** die genannte Bohrung (7) einen ersten Abschnitt mit einem kreisförmigen Querschnitt (8) und einen zweiten Abschnitt mit einem rechteckförmigen Querschnitt (9) aufweist.

3. Steuerpedal- und Montagevorrichtung gemäß Anspruch 2, **dadurch gekennzeichnet, dass** das äußere Profil der Welle (15) in dem Drehsensor (16) im Wesentlichen dem inneren Profil der axialen Bohrung (7) nachgebildet ist.

4. Steuerpedal- und Montagevorrichtung gemäß Anspruch 1, **dadurch gekennzeichnet, dass** die Halterung (4) einen Abschnitt aufweist, der wie eine nach unten gekehrte bzw. umgedrehte U-Form ausgebildet ist und **gekennzeichnet dadurch, dass** die Enden des Anschlussstifts (3) zu deren Außenfläche gegenüberliegen.

## Revendications

1. Pédale comprenant un dispositif pour l'installation d'un capteur de position/rotation sur une pédale (1) d'un ensemble de pédales d'un véhicule à moteur, le dispositif comprenant :
- une goupille (3) sur laquelle la pédale (1) est en pivotement ;
- un support (4) apte à être fixé au corps du véhicule à moteur et incluant ladite goupille (3) ;
ladite goupille (3) tournant sur deux douilles (11, 12) mises en place par l'intermédiaire de logements (10) prévus dans le support, étant fixée en rotation à une extrémité (2) de la pédale au moyen d'une vis auto-taraudeuse (14) et étant munie d'un trou axial (7) pour l'insertion d'un arbre (15) du capteur de rotation (16);
tandis que ladite goupille (3) comprend une gorge longitudinale (5) sur laquelle une extrémité de ladite vis auto-taraudeuse (14) est insérée de manière substantiellement orthogonale.

2. Pédale et dispositif d'installation selon la revendication 1, **caractérisés en ce que** ledit trou présente un premier secteur de section circulaire (8) et un deuxième secteur de section rectangulaire (9).

3. Pédale et dispositif d'installation selon la revendication 2, **caractérisés en ce que** le profil externe de l'arbre (15) du capteur de rotation (16) reproduit substantiellement le profil interne du trou axial (7).

4. Pédale et dispositif d'installation selon la revendication 1, **caractérisés en ce que** le support (4) a une section ayant une forme semblable à un U tourné vers le bas et **en ce que** les extrémités de la goupille (3) sont tournées vers la surface externe.
